Europäisches Patentamt

European Patent Office

Office européen des brevets

(11) Publication number: **0 077 208**

**B1**

(12) **EUROPEAN PATENT SPECIFICATION**

(45) Date of publication of patent specification: **16.01.85**

(21) Application number: **82305414.3**

(22) Date of filing: **12.10.82**

(51) Int. Cl.⁴: **C 02 F 1/68,** B 01 J 4/02, F 04 B 13/02

(54) **Apparatus for intermittently dispensing a liquid additive into a flowing liquid stream.**

(30) Priority: **13.10.81 US 310018**

(43) Date of publication of application: **20.04.83 Bulletin 83/16**

(45) Publication of the grant of the patent: **16.01.85 Bulletin 85/03**

(84) Designated Contracting States: **AT BE CH DE FR GB IT LI NL SE**

(56) References cited:
FR-A- 980 731
FR-A-1 360 021
GB-A- 674 274
US-A-3 229 854
US-A-3 385 474

(73) Proprietor: **Clow Corporation 6622 Southpoint Drive South Barnett Plaza Suite 400 Jacksonville Florida 32216 (US)**

(72) Inventor: **Klepa, Peter P. 3450 St. Susan Place Los Angeles California, 90066 (US)**

(74) Representative: **Newby, John Ross et al J.Y. & G.W. Johnson Furnival House 14/18 High Holborn London WC1V 6DE (GB)**

Courier Press, Leamington Spa, England.

## Description

The invention relates to dispensing systems for providing an automatic discharge of a chemical additive to a liquid stream. For example, it is often desirable to be able to treat water streams associated with, for example, cooling towers, heat exchangers or evaporative condensers, to control various problems such as microbiological fouling, corrosion and accumulation of scale. Although very large installations often have very sophisticated treatment systems and regularly scheduled maintenance, there are many somewhat smaller systems which could operate without maintenance for a few weeks to a few months if a relatively small quantity of an appropriate additive were fed to the liquid stream flowing through them on a periodic basis during their hours of operation.

Examples of prior art systems for dispensing chemical additives contained in solid briquettes are found in US—A—3,430,823 as well as in US—A—3,385,483 and US—A—3,094,134. Each of these known systems permits the lowest briquette in a stack of such briquettes to be intermittently contacted and partially dissolved as the water level in a feed chamber cyclically rises and is then emptied by a siphon tube. Although dispensing systems based on the use of briquettes perform quite satisfactorily, the briquettes are expensive to manufacture and restrict somewhat the ability to provide a wide range of suitable chemical additives and the concentrations actually added to the liquid stream. Additives in liquid form are more satisfactory in the latter respects, but existing commercial dispensing systems utilize drip feeders which can be difficult to adjust on start-up, which are relatively expensive, and which can become very difficult to reuse if the feed bottle of liquid additive is allowed to empty completely so that crystals of the additive or other solid deposits have a chance to form. Also, such drip feeders are wasteful if they continue to meter additive when the unit whose liquid flow is being treated is not operating. US—A—2,461,334 discloses a system for siphoning a liquid treatment additive into a feed chamber, but appears to be quite sensitive to changes in viscosity with temperature, and uses a tube to meter the desired amount of additive chemical required.

The present invention seeks to provide an improved liquid additive dispensing apparatus which will offer the advantages of the briquette-based feeders in dispensing the chemicals only when needed while also offering the advantage of being able to utilize a large variety of liquid chemicals which are not available in solid form, and which, being liquid, are easier to package for use.

According to the present invention there is provided an apparatus for intermittently dispensing a liquid additive into a liquid stream flowing through a feeder chamber, which feeder chamber has an inlet for receiving said liquid stream and an outlet in the form of a siphon tube which is positioned within the feeder chamber so as to intermittently reduce the level of liquid in the feeder chamber when the level of the liquid therein reaches a predetermined maximum elevation, said apparatus including mounting means to support a container of liquid additive and an inverted U-shaped capillary siphon tube to pass liquid additive from a container on the mounting means into the feeder chamber, which is characterised in that valve means is provided on said container having an actuating member extending into said feeder chamber; means is mounted in said feeder chamber for actuating said actuating member of said valve means in response to the liquid in said feeder chamber reaching, or at least closely approaching, said predetermined maximum elevation; said valve means having a metering chamber sized to contain substantially the quantity of liquid additive which is to be dispensed upon each actuation of the actuating member; said metering chamber being selectively sealed at its lower end by a sealing means which is controlled by said actuating member; said metering chamber having its upper end in communication with the liquid additive in said container by means of said inverted U-shaped capillary siphon tube, said capillary siphon tube serving to slowly fill said metering chamber following each actuation of the actuating member to empty the metering chamber.

In its preferred form, the valve means is a spring loaded ball which is actuated by a float located in the feeder chamber. Since it may well be desirable to feed no more than 1 ml (e.g. about 0.1 ml) of chemical additive at each actuation of the valve means, the free volume in the metering chamber will be of this size and will be located immediately above the ball. The tiny metering chamber communicates with the liquid additive in the container by means of a small diameter, inverted U-shaped capillary tube. In order to prevent crystallization of chemicals in the valve assembly when the apparatus is not actuated for an extended period, the valve means is preferably positioned so that a portion of the liquid in the feeder chamber will contact it each time the valve means is actuated. The liquid flowing in the feeder chamber will flush the dispensed chemical additive away from the flow openings in the valve means to a sufficient extent that crystals or other solid deposits cannot form and produce clogging.

One embodiment of apparatus according to the invention will now be described, by way of example, with reference to the accompanying drawing, in which

Figure 1 is a sectional side view of the closure and valve assembly of the apparatus taken on the line 1—1 of Figure 2.

Figure 2 is a top sectional view taken on the line 2—2 of Figure 1,

Figure 3 is a sectional view taken on the line 3—3 of Figure 1, and

Figures 4 to 6 are partially sectioned side views of part of the apparatus showing how the valve assembly of Figure 1 is employed to dispense a measured amount of a liquid chemical into a feeder chamber.

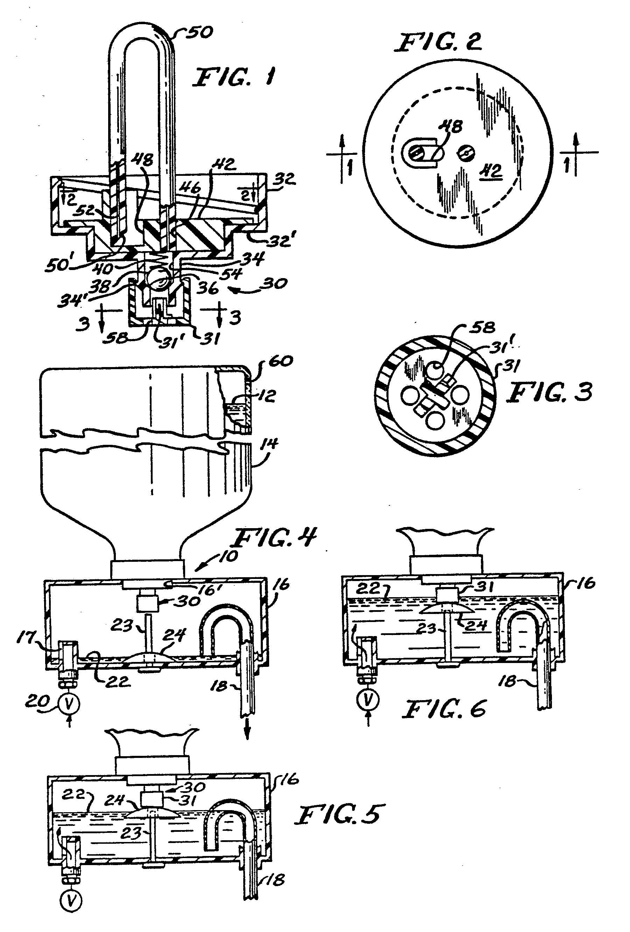

The improved dispensing apparatus is indicated generally at 10 in Figure 4. The apparatus dispenses a liquid chemical additive 12, contained in a container 14, into a feeder chamber 16 which has an inlet port 17 and an outlet curved siphon tube 18. A valve 20 permits liquid 22, which is to be chemically treated, to pass through the inlet port 17 into the feeder chamber 16 at an adjustably controlled rate. A guide pin 23, which extends up from the bottom of the feeder chamber 16, acts as a guide for a float 24, which may be made of expanded foam or other suitable material. As the level of liquid 22 commences to rise from its lowest level, as indicated in Figure 4, the float 24 will rise with it until it initially contacts a dispensing valve means 30, as indicated in Figure 5. As additional liquid 22 enters the feeder chamber 16 at a rate exceeding the rate of overflow through the siphon tube 18, the float 24 will rise further to actuate a spring-biased actuating button 31 of the dispensing valve 30, as shown in Figure 6. Naturally, the force of the valve actuating button 31 on the float 24 will cause the level of the liquid 22 to rise more than the float. When the liquid level rises sufficiently to completely fill the inverted U-portion of the siphon tube 18, the siphon effect will be established in the tube 18 and the liquid in the feeder chamber 16 will quickly drain back to the level shown in Figure 4.

The construction of the dispensing valve 30 is shown in Figures 1 to 3. The dispensing valve 30 is mounted in a moulded cap 32 which can be attached by a screw thread, adhesive, or other means to the container 14. The actuating button 31 is guided on a tubular outer end portion 34 of the cap 32 and retained by an integral annular ring portion 34'. An internal shouldered ball seat 36 on the tubular portion 34 is engaged by a sealing ball 38 which is forced against the seat 36 by a spring 40. The upper end of the spring 40 engages a lower surface of a moulded insert member 42 which is secured by adhesive or other means in the bottom of cap 32. The insert member 42 includes a small circular aperture 46 and a larger slotted opening 48. The outlet end of a plastics capillary siphon tube 50 having a capillary opening 52 is pressed tightly into the aperture 46 while an angled inlet end 50' is supported in the slotted opening 48. The capillary siphon tube 50 serves to limit the number of drops of the chemical 12 that can be dispensed into a metering chamber 54 during the time that the ball 38 is lifted from its seat 36 by an actuator portion 31' of the actuating button 31 when the latter is lifted by the float 24. Thus, each filling cycle of the feeder chamber 16 by the liquid 22 and the accompanying actuation of the dispensing valve 30 will cause a substantially constant amount of the chemical 12 to flow around the ball 38 and down through openings 58 in the actuating button 31 into the liquid 22. The dispensed quantity of chemical is substantially equal to the free volume of the metering chamber 54 when the ball 38 is seated on its seat 36, the metering chamber 54 comprising the available volume inside the tubular outer end portion 34 between the seat 36 and the underside of the insert member 42 which contains the capillary siphon tube 50. Typically this available volume could be no more than 1 ml and could be 0.1 ml or less.

To prevent any possibility that the dispensing openings 58 will become blocked from drying and possible crystallization of the chemical 12 when there are long periods in which liquid 22 is not flowing into the feeder chamber 16, the various elements of the apparatus are preferably formed and positioned relative to each other so that the level of liquid 22 will cover the openings 58 during the dispensing operation. This relationship is apparent in Figure 6. Since chemical could not be dispensed for long through a capillary tube from a rigid closed container 14, a small vent opening 60 is provided in the container 14 after it is inverted to its Figure 4 operative use position. Although the means for mounting the container 14 on top of the feeder chamber 16 is shown as an annular shoulder 32' on the cap 32 which rests on the periphery of an opening 16' in the top of the feeder chamber 16, it is obvious that many other forms of mounting connection could be used.

The apparatus illustrated could be used for many different applications, one being the addition of a liquid water-conditioning agent into a recirculating water supply for a refrigeration system.

**Claims**

1. An apparatus (10) for intermittently dispensing a liquid additive (12) into a liquid stream (22) flowing through a feeder chamber (16), which feeder chamber (16) has an inlet (17) for receiving said liquid stream (22) and an outlet in the form of a siphon tube (18) which is positioned within the feeder chamber (16) so as to intermittently reduce the level of the liquid (22) in the feeder chamber (16) when the level of the liquid (22) therein reaches a predetermined maximum elevation, said apparatus including mounting means (16', 32') to support a container (14) of liquid additive (12) and an inverted U-shaped capillary siphon tube (50) to pass liquid additive (12) from a container (14) on the mounting means (16', 32') into the feeder chamber (16), characterised in that valve means (30) is provided on said container (14) having an actuating member (31) extending into said feeder chamber (16); means (23, 24) is mounted in said feeder chamber (16) for actuating said actuating member (31) of said valve means (30) in response to the liquid (22) in said feeder chamber (16) reaching, or at least closely approaching, said predetermined maximum elevation; said valve means (30) having a metering chamber (54) sized to contain substantially the quantity of liquid additive (12) which is to be dispensed upon each actuation of the actuating member (31); said metering chamber (54) being selectively sealed at its lower end by a sealing means (38, 34') which is controlled by said actuating member (31); said metering chamber (54) having its upper end in communication with the liquid additive (12) in said container (14) by means of said inverted U-shaped capillary siphon tube (50), said capillary siphon tube (50) serving to slowly fill said metering chamber (54) following each actuation of the actuating member (31) to empty the metering chamber (54).

2. Apparatus as claimed in claim 1, characterised in that said actuating portion (31) of said valve means (30) includes openings (58) through which liquid additive (12) from said metering chamber (54) can flow into the feeder chamber (16).

3. Apparatus as claimed in claim 2, characterised in that said openings (58) in said actuating portion (31) are positioned within the feeder chamber (16) so as to be flushed by the liquid (22) in the feeder chamber (16) as the level of said liquid (22) reaches said predetermined maximum elevation.

4. Apparatus as claimed in any preceding claim, characterised in that said valve means (30) is mounted in a cap (32) which normally seals an otherwise open-end of said container (14) of liquid additive (12).

5. Apparatus as claimed in claim 4, characterised in that said cap (32) contains an insert member (42) which includes a pair of apertures (46, 48) for retaining the ends of said inverted U-shaped capillary tube (50), the outer end portion (34) of said cap (32) being tubular in shape and including retaining means (34') for guiding and retaining said actuating member (31).

6. Apparatus as claimed in claim 5, characterised in that said tubular outer end portion (34) of said cap (32) includes an internal shouldered seat (36) which cooperates with an internal ball (38) and a compression spring (40) to form said valve means (30), said metering chamber (54) comprising the free volume of the internal portion of said tubular outer end portion (34) which is located between said internal shouldered seat (36) and the outlet end of said capillary siphon tube (50).

7. Apparatus as claimed in any preceding claim, characterised in that said means (23, 24) mounted in said feeder chamber (16) for actuating said valve means (30) comprises a float (24).

8. Apparatus as claimed in claim 7, characterised in that the float (24) moves vertically along a guide (23) to engage the actuating member (31) of said valve means (30) before the liquid (22) in the feeder chamber (16) reaches said predetermined maximum elevation.

9. Apparatus as claimed in any preceding claim, characterised in that said valve means (30) forms part of a cap (32) secured on the open top of a container (14) of liquid additive (12), said container (14) then being inverted and supported with its gap (32) lowermost on an upper surface of the feeder chamber (16).

10. Apparatus as claimed in any preceding claim, characterised in that the free volume of the metering chamber does not exceed 1 ml.

**Patentansprüche**

1. Eine Vorrichtung (10) zur intermittierenden Zugabe eines flüssigen Mittels (12) in einen Flüssigkeitsstrom (22), der eine Zugabekammer (16) durchströmt, wobei diese Zugabekammer (16) einen Zulauf (17) zur Einleitung des genannten Flüssigkeitsstroms (22) und einen Auslauf in Form eines Heberrohres (18) besitzt, das so innerhalb der Zugabekammer (16) angeordnet ist, daß der Flüssigkeitsspiegel (22) in der Zugabekammer (16) intermittierend verringert wird, wenn der dort vorhandene Flüssigkeitsspiegel (22) ein vorbestimmtes Höchstniveau erreicht, wobei die genannte Vorrichtung Montagehalterungen (16', 32') zur Aufnahme eines Behälters (14) für das flüssige Mittel (12) und ein umgekehrt eingebautes, U-förmiges Heberkapillarrohr (50) zur Einleitung des flüssigen Mittels (12) aus einem Behälter (14), der auf den Montagehalterungen (16', 32') ruht, in die Zugabekammer (16) umfaßt, dadurch gekennzeichnet, daß eine Ventilvorrichtung (30) am genannten Behälter (14) vorgesehen ist, deren Stellglied (31) in die genannte Zugabekammer (16) hineinragt; die Vorrichtung (23, 24) in der genannten Zugabekammer (16) zur Betätigung des genannten Stellglieds (31) der genannten Ventilvorrichtung (30) dient, wenn die Flüssigkeit (22) in der genannten Zugabekammer (16) das vorbestimmte Höchstniveau erreicht oder sich diesem zumindest nähert; die genannte Ventilvorrichtung (30) eine Dosierkammer (54) von entsprechender Größe umfaßt, um im wesentlichen die Menge des flüssigen Mittels (12) aufzunehmen, die bei jeder Betätigung des Stellglieds (31) zugegeben werden muß, die genannte Dosierkammer (54) an ihrem unteren Ende zur wahlweisen Absperrung eine Absperrvorrichtung (38, 34') besitzt, die über das genannte Stellglied (31) gesteuert wird; die genannte Dosierkammer (54) mit ihrem oberen Ende mit dem flüssigen Mittel (12) im genannten Behälter (14) über das genannte, umgekehrt eingebaute, U-förmige Heberkapillarrohr (50) in Verbindung steht, wobei das genannte Heberkapillarrohr (50) dazu dient, nach jeder erfolgten Betätigung des Stellglieds (31) zur Leerung der Dosierkammer (54) die genannte Dosierkammer (54) langsam zu füllen.

2. Eine Vorrichtung gemäß Anspruch 1, dadurch gekennzeichnet, daß das genannte Stellglied (31) der genannten Ventilvorrichtung (30) Öffnungen (58) umfaßt, durch die das flüssige Mittel (12) aus der genannten Dosierkammer (54) in die Zugabekammer (16) fließen kann.

3. Eine Vorrichtung gemäß Anspruch 2, dadurch gekennzeichnet, daß die genannten Öffnungen (58) im genannten Stellglied (31) so innerhalb der Zugabekammer (16) angeordnet sind, daß sie von der Flüssigkeit (22) in der Zugabekammer (16) durchspült werden, wenn der Spiegel der genannten Flüssigkeit (22) das vorbestimmte Höchstniveau erreicht.

4. Eine Vorrichtung gemäß irgendeinem der vorgenannten Ansprüche, dadurch gekennzeichnet, daß die genannte Ventilvorrichtung (30) von einer Haube (32) umgeben ist, die normalerweise ein ansonsten offenes Ende des genannten Behälters (14) für das flüssige Mittel (12) absperrt.

5. Eine Vorrichtung gemäß Anspruch 4, dadurch gekennzeichnet, daß die genannte Haube (32) einen Einsatz (42) umfaßt, der Öffnungen (46, 48) zur Aufnahme der Enden des genannten, umgekehrt eingebauten, U-förmigen Kapillarrohres (50) besitzt, wobei der äußere Endabschnitt (34) der genannten Haube (32) rohrförmig ist und eine Haltevorrichtung (34') zur Führung und Halterung des genannten Stellglieds (31) umfaßt.

6. Eine Vorrichtung gemäß Anspruch 5, dadurch gekennzeichnet, daß der genannte, rohrförmige, äußere Endabschnitt (34) der genannten Haube (32) einen inneren, abgeschrägten Sitz (36) hat, der zusammen mit einer innenliegenden Kugel (38) und einer Druckfeder (40) die genannte Ventilvorrichtung (30) bildet, wobei die genannte Dosierkammer (54) das freie Volumen des inneren Teils des genannten rohrförmigen, äußeren Endabschnitts (34) umfaßt, der zwischen dem genannten inneren, abgeschrägten Sitz (36) und dem Austrittsende des genannten Heberkapillarrohres (50) angeordnet ist.

7. Eine Vorrichtung gemäß irgendeinem der vorgenannten Ansprüche, dadurch gekennzeichnet, daß die genannte Vorrichtung (23, 24) in der genannten Zugabekammer (16) zur Betätigung der genannten Ventilvorrichtung (30) eine Schwimmervorrichtung (24) umfaßt.

8. Eine Vorrichtung gemäß Anspruch 7, dadurch gekennzeichnet, daß sich die Schwimmervorrichtung (24) vertikal entlang einer Führung (23) bewegt, um auf das Stellglied (31) der genannten Ventilvorrichtung (30) einzuwirken, bevor die Flüssigkeit (22) in der Zugabekammer (16) das vorbestimmte Höchstniveau erreicht.

9. Eine Vorrichtung gemäß irgendeinem der vorgennanten Ansprüche, dadurch gekennzeichnet, daß die genannte Ventilvorrichtung (30) Bestandteil einer Haube (32) ist, die an der oberen Öffnung eines Behälters (14) für das flüssige Mittel (12) befestigt ist, wobei der genannte Behälter (14) dann umgekehrt wird, so daß er mit seiner Haube (32) zuunterst auf der oberen Fläche der Zugabekammer (16) ruht.

10. Eine Vorrichtung gemäß irgendeinem der vorgenannten Ansprüche, dadurch gekennzeichnet, daß das freie Volumen der Dosierkammer 1 ml nicht überschreitet.

**Revendications**

1. Dispositif (10) ajouter par intermittence un additif liquide (12) à un courant liquide (22) traversant une chambre d'alimentation (16), cette chambre d'alimentation (16) présentant une entrée (17) pour recevoir ledit courant liquide (22) et une sortie, sous forme d'un tube en siphon (18), disposé dans la chambre d'alimentation (16), de manière à réduire, par intermittence, le niveau du liquide (22) dans la chambre d'alimentation (16) lorsque le niveau du liquide (22) dans celle-ci approche une hauteur maximale prédéterminée, ledit dispositif comprenant des supports (16', 32') pour supporter un récipient (14) d'additif liquide (12) et un tube capillaire en forme de U renversé (50) servant de siphon pour faire passer l'additif liquide (12) d'un récipient (14) sur les supports (16', 32') dans la chambre d'alimentation (16), caractérisé en ce qu'un dispositif à vanne (30) est prévu sur ledit récipient (14) pourvu d'un élément de commande (31) s'étendant dans ladite chambre d'alimentation (16), l'élément (23, 24) est monté dans ladite chambre d'alimentation (16) pour actionner ledit élément de commande (31) de ladite vanne (30) sous l'effet du liquide (22) dans ladite chambre d'alimentation (16), qui atteint, ou du moins approche de très près, ladite hauteur maximale prédéterminée ledit dispositif à vanne (30) presentant une chambre de dosage (54), dimensionnée vanne (30) presentant une chambre de dosage (54), dimensionnée de manière à contenir essentiellement la quantité d'additif liquide (12) qui doit être ajoutée à chaque manoeuvre de l'élément de commande (31), ladite chambre de dosage (54) étant fermée hermétiquement, d'une manière sélective, à son extrémité inférieure par un dispositif de scellement (38, 54'), qui est commandé par ledit élément de commande (31), ladite chambre de dosage (54) ayant son extrémité supérieure en communication avec l'additif liquide (12) dans ledit récipient (14), au moyen dudit tube capillaire en forme de U renversé (50) servant de siphon, ledit tube capillaire servant de siphon (50) servant à remplir lentement ladite chambre de dosage (54) après chaque manoeuvre de l'élément de commande (31) pour vider la chambre de dosage (54).

2. Dispositif selon la revendication 1, caractérisé en ce que ledit élément de commande (31) dudit dispositif à vanne (30) comprend des ouvertures (58), par lesquelles l'additif liquide (12), provenant de ladite chambre de dosage (54), peut s'écouler dans la chambre d'alimentation (16).

3. Dispositif selon la revendication 2, caractérisé en ce que lesdites ouvertures (58) dans ladite partie de commande (31), sont disposées dans la chambre d'alimentation (16), de façon à être balayées par le liquide (22) dans la chambre d'alimentation (16), lorsque le niveau dudit liquide (22) atteint ladite hauteur maximale prédéterminée.

4. Dispositif selon l'une des revendications précédentes, caractérisé en ce que ledit dispositif à vanne (30) est montée dans une coiffe (32), qui ferme normalement, d'une manière hermétique, une extrémité ouverte dudit récipient (14) d'additif liquide (12).

5. Dispositif selon la revendication 4, caractérisé en ce que ladite coiffe (32) contient un élément inséré (42) qui comprend une paire d'ouvertures (46, 48) pour retenir les extrémités dudit tube capillaire en forme de U renversé (50), la partie d'extrémité extérieure (34) de ladite coiffe (32) ayant une forme tubulaire et comprenant un dispositif de retenue (34') pour guider et retenir ledit élément de commande (31).

6. Dispositif selon la revendication 5, caractérisé en ce que ladite partie tubulaire de l'extrémité extérieure (34) de ladite coiffe (32) comprend un siège intérieur à épaulement (36), qui constitue ledit dispositif à vanne (40), en combinaison avec une bille intérieure (38) et un ressort de compression (40), ladite chambre de dosage (54) comprenant le volume libre de la partie intérieure de ladite partie tubulaire de l'extrémité extérieure (34), qui est située entre ledit siège intérieur à épaulement (36) et l'extrémité de sortie dudit tube capillaire (50) servant de siphon.

7. Dispositif selon l'une des revendications précédentes, caractérisé en ce que ledit élément (23, 24), monté dans ladite chambre d'alimentation (16) pour actionner ledit dispositif à vanne (30), comprend un flotteur (24).

8. Dispositif selon la revendication 7, caractérisé en ce que le flotteur (24) se déplace verticalement le long d'un guide (23), de manière à venir au contact de l'élément de commande (31) dudit dispositif à vanne (30), avant que le liquide (22) dans la chambre d'alimentation (16) n'atteigne ladite hauteur maximum prédéterminée.

9. Dispositif selon l'une des revendications précédentes, caractérisé en ce que ledit dispositif à vanne (30) fait partie d'une coiffe (32), fixée sur le sommet ouvert d'un récipient (14) d'additif liquide (12), ledit récipient (14) étant ensuite renversé et reposant, avec sa coiffe (32) dirigée vers le bas, sur une surface supérieure de la chambre d'alimentation (16).

10. Dispositif selon l'une des revendications précédentes, caractérisé en ce que le volume libre de la chambre de dosage ne dépasse pas 1 ml.

0 077 208

FIG. 1

FIG. 2

FIG. 3

FIG. 4

FIG. 5

FIG. 6

1